# EUROPÄISCHE PATENTANMELDUNG

(11) **EP 0 625 671 A1**
(43) Veröffentlichungstag der Anmeldung: **23.11.1994**
(21) Anmeldenummer: 94104324.2
(22) Anmeldetag: 18.03.1994
(51) Int. Cl.: F16L 55/165

(54) **Verfahren und Vorrichtung zum Sanieren einer erdverlegten Rohrleitung**

(30) Priorität: 19.03.1993 DE 4308654; 02.04.1993 DE 4310650
(71) Anmelder: DRB TECHNOLOGIE SERVICE GmbH, D-52349 Düren (DE)
(72) Erfinder: Geiss, Dieter, D-42555 Velbert (DE); Molitor, Franz, D-40764 Langenfeld (DE)
(74) Vertreter: Hosbach, Hans Ulrich

(57) **Zusammenfassung**

Durch die zu sanierende Rohrleitung (1) wird ein Molch (2) hindurchbewegt, dessen Brecheinrichtung (4) auf die Rohrleitung radiale, von außen nach innen wirkende Kräfte ausübt. Diese werden durch entsprechend geformte Brechschneiden (8, 9) erzeugt. Der Brechvorgang wird unterstützt durch stangenförmige Zugelemente (7), die die Brecheinrichtung (4) mit einem vorderen Führungsabschnitt (3) des Molches verbinden. Die Rohrleitungsstücke (10) gelangen ins Innere des vom Molch eingezogenen neuen Rohres (6) und werden durch dieses hindurch abtransportiert, und zwar unter der Mitwirkung eines Transportfluids.

## Beschreibung

Die Erfindung betrifft ein Verfahren und eine Vorrichtung zum Sanieren einer erdverlegten Rohrleitung, wobei die Rohrleitung zerstückelt und durch ein gleichzeitig eingezogenes neues Rohr ersetzt wird. Das Zerstückeln der Rohrleitung erfolgt mittels eines Molches, der durch die Rohrleitung hindurchbewegt wird, wobei an seinem hinteren Ende das neue Rohr befestigt ist.

Bisher geht man hierbei so vor, daß die Rohrleitung von innen nach außen aufgesprengt und dabei gleichzeitig für das Einziehen des neuen Rohres aufgeweitet wird. Die Rohrleitungsstücke verbleiben im Boden.

Hieraus können sich Nachteile ergeben, und zwar insbesondere dann, wenn bei der Zerstückelung der Rohrleitung Schadstoffe freigesetzt werden, die die Gefahr einer Kontaminierung des Bodens und insbesondere des Grundwassers mit sich bringen. Aus diesen Gründen war es bisher nicht möglich, die an sich bewährte Technik auf die Sanierung von Rohrleitungen aus asbesthaltigem Material, beispielsweise aus Asbestzement anzuwenden.

Der Erfindung liegt die Aufgabe zugrunde, hier Abhilfe zu schaffen und eine Möglichkeit vorzusehen, die es gestattet, auch solche Rohrleitungen zu sanieren, deren Rohrleitungsstücke problematisch sind, insbesondere unter Umweltschutzgesichtspunkten.

Zur Lösung dieser Aufgabe ist das Verfahren nach der Erfindung dadurch gekennzeichnet, daß die Rohrleitung von außen nach innen zerstückelt wird und daß die Rohrleitungsstücke in das neue Rohr eingeleitet und durch dieses hindurch abgefördert werden.

Die Rohrleitungsstücke werden also nicht nach außen in das umgebende Erdreich hineingedrückt, sondern vielmehr dazu gezwungen, nach innen zu fallen, so daß sie ins Innere des neuen Rohres gelangen und durch dieses hindurch abtransportiert werden können. Dabei besteht nicht mehr die Gefahr, daß der Boden durch die Rohrleitungsstücke bzw. durch aus dem Rohrleitungsmaterial freigesetzte Schadstoffe kontaminiert wird.

In wesentlicher Weiterbildung der Erfindung wird vorgeschlagen, die zu sanierende Rohrleitung zu zerfräsen, und zwar vorzugsweise mitsamt demjenigen Bereich der Umgebung (Erdreich, etwaige An- oder Aufbauten), die das Einziehen des neuen Rohres behindern könnten. Das Zerfräsen der Rohrleitung läßt gleichmäßige und hohe Arbeitsgeschwindigkeiten zu. Als wesentlicher weiterer Vorteil ergibt sich, daß durch Abfräsen des umgebenden Erdreichs ausreichend Raum für das neue Rohr geschaffen werden kann, ohne daß das Erdreich aufgeweitet werden müßte. Der nach dem Stande der Technik vorgesehene Aufweitvorgang hat sich nämlich als nicht ganz unproblematisch erwiesen. So konnten in der Nähe liegende andere Versorgungsleitungen oder Einrichtungen beschädigt werden, und es konnte zu einem Anheben der Oberfläche der Rohrleitungstrasse kommen. Diese Gefahren werden nun vermieden.

Um die Rohrleitungsstücke aus dem neuen Rohr zu entfernen, wird vorzugsweise ein Transportfluid eingesetzt. Dieses kann bereits während des Zerkleinerns der Rohrleitung zum Einsatz kommen, wobei es dazu beiträgt, schon die Einbringung der Rohrleitungsstücke in das neue Rohr zu erleichtern. Allerdings können die Stücke auch selbsttätig in das neue Rohr gelangen, und zwar im Zuge des Einziehvorganges. Unter diesen Umständen ist es dann vorteilhaft, das Transportfluid nach dem Einziehen des neuen Rohres durch letzteres hindurchzufördern. Die Rohrleitungsstücke und ggf. das in das Rohr eingebrachte Erdreich verbleiben also so lange im neuen Rohr, bis der eigentliche Einziehvorgang beendet ist, woraufhin das Entfernen der Rohrstücke und ggf. des Erdreichs in einem problemlosen nachträglichen Arbeitsgang durchgeführt wird.

Kommt das Transportfluid hingegen bereits während des Einziehvorgangs zum Einsatz, so ist es vorteilhaft, das Transportfluid durch die zu sanierende Rohrleitung hindurchzuführen. Alternativ besteht die u.U. bevorzugte Möglichkeit, das Transportfluid am Orte des Zerbrechens der Rohrleitung auszudüsen.

In jedem Falle kommt als Transportfluid Druckluft in Frage. Für höhere Förderleistungen wird sich allerdings u.U. Wasser als vorteilhafter erweisen.

Für den Fall, daß die zu sanierende Rohrleitung aus schadstoffhaltigem Fasermaterial besteht, wird in Weiterbildung der Erfindung vorgeschlagen, die Rohrleitungsstücke mit einem Faserbindemittel zu behandeln. Ferner kann es vorteilhaft sein, ein Bodenverfestigungsmittel am Orte des Zerkleinerns der Rohrleitung in das umgebende Erdreich einzubringen. Vorzugsweise wird man das Faserbindemittel und/oder das Bodenverfestigungsmittel dem Transportfluid beimischen.

Der Transport der Rohrleitungsstücke und ggf. des mitgeführten Erdreichs kann ferner dadurch unterstützt werden, daß man an das freie Ende des neuen Rohres einen Unterdruck anlegt, und zwar vorzugsweise an einen an das freie Ende des neuen Rohres und des Erdreichs angeschlossenen Aufnahmebehälter für die Rohrleitungsstücke. Dadurch wird verhindert, daß Schadstoffe beim Austritt der Rohrleitungsstücke und des Erdreichs aus dem neuen Rohr in die Umgebung gelangen.

In wesentlicher Weiterbildung der Erfindung wird vorgeschlagen, in der zu sanierenden Rohrleitung Sollbruchstellen, insbesondere in Form von Schwächungslinien zu erzeugen, um das Zerbrechen der Rohrleitung zu erleichtern und um sicherzustellen, daß selbst bei zähem Rohrleitungsmaterial Rohrleitungsstücke passender Größe gebildet werden.

Die erfindungsgemäße Vorrichtung zum Sanieren einer erdverlegten Rohrleitung und zum Einziehen eines neuen Rohres weist einen durch die Rohrleitung hindurch bewegbaren Molch auf, der mit einem vorderen Führungsabschnitt, einer hinteren Befestigungseinrichtung für das neue Rohr und einer dazwischenliegenden Brecheinrichtung zum Zerstückeln der Rohrleitung versehen ist. Diese Vorrichtung ist dadurch gekennzeichnet, daß die Brecheinrichtung des Molches einen sich nach vorne und außen erweiternden, die zu sanierende Rohrleitung übergreifenden und in das neue Rohr mündenden Brechtrichter definiert, der durch Zugelemente mit dem Führungsabschnitt des Molches verbunden ist. Der Brechtrichter übt radial von außen nach innen gerichtete und ggf. tangentiale Kräfte auf die Rohrleitung aus, wodurch letztere zerstückelt wird. Die Rohrleitungsstücke ggf. zusammen mit abgetragenem Erdreich werden vom Brechtrichter in das anschließende neue Rohr eingeleitet. Die Zugelemente, die den Brechtrichter mit dem Führungsabschnitt des Molches verbinden, können als Brechhilfen wirken.

Der Brechtrichter kann rotationssymmetrisch ausgebildet sein. Vorteilhafter ist es u.U., ihn schraubenlinienförmig auszubilden, so daß der Angriffspunkt der Kraft auf dem Umfang der zu zerstückelnden Rohrleitung wandert.

Für die Gestaltung des Brechtrichters werden in Weiterbildung der Erfindung drei besonders vorteilhafte Möglichkeiten vorgeschlagen. Zum einen kann der Brechtrichter von einer umlaufenden Wand definiert werden, die die Rohrleitung über dem gesamten Umfang umschließt. Dabei bildet die umlaufende Wand vorzugsweise ein konisch verjüngtes vorderes Ende, welches sich unter etwaige Rohrleitungsmuffen schiebt und diese aufsprengt. Zusätzlich dazu kann die umlaufende Wand mindestens ein radiales Messer tragen, um elastische Ringe und Manschetten am Orte der Muffenverbindung aufzuschneiden. Bei der zweiten Ausbildungsform wird der Brechtrichter von über dem Umfang verteilten Brechschneiden definiert, die auf einzelne Stellen auf dem Umfang der zu zerstückelnden Rohrleitung einwirken. Dabei ist es besonders vorteilhaft, daß einige der Brechschneiden eine verlängerte radiale Erstreckung aufweisen, um Brechkräfte von außen auch auf etwaige Rohrleitungsmuffen ausüben zu können. Deren Bruchstücke zusammen mit etwaigen Dichtungen und anderen elastischen Elementen werden dann ebenfalls dazu gezwungen, ins Innere des neuen Rohres einzutreten, wodurch eine komplette Entsorgung sichergestellt ist.

Nach der dritten Ausführungsform wird der Brechtrichter von einem motorisch um die Molchachse drehbaren Frästrichter definiert. Der Frästrichter übt sowohl radial von außen nach innen als auch in Umfangsrichtung sowie in Vortriebsrichtung des Molches gerichtete Kräfte auf die Rohrleitung aus, wodurch letztere zerkleinert wird.

Der Frästrichter ist rotationssymmetrisch ausgebildet und besitzt einen in Vortriebsrichtung des Molches gerichteten Kranz von Schneid- bzw. Fräsmessern, die das im Bereich dieser Messer befindliche Rohrmaterial, das umgebende Erdreich oder andere im Umgebungsbereich der Rohrleitung befindliche Gegenstände, wie z.B. Fundamente, Betoneinfassungen, Anschlußleitungen, Abgänge etc. zerkleinert und durch die Trichterwirkung und durch den fortlaufenden Vortrieb des Molches zum Mittelpunkt dieses Trichters hin befördert.

Vorzugsweise besitzen die auf dem Frästrichter angeordneten Messer zwischen den Schneiden Aufnahmerillen, die durch die Drehung und die Vorwärtsbewegung des Frästrichters das von den Messern erfaßte und zerstückelte Material zum Mittelpunkt des Frästrichters bzw. zur Rohrachse hin fördern.

Der Frästrichter ist im Bereich des freien Querschnitts der zu sanierenden Rohrleitung mit mindestens zwei Durchtrittsöffnungen versehen, durch die das abgetragene und zerkleinerte Erdreich und die zerkleinerte Rohrleitung in das dahinterliegende, eingezogene neue Rohr gefördert werden. Die Öffnungen sind symmetrisch angeordnet. In seinem Zentrum kann der Frästrichter drehbar auf einer in der Rohrlängsachse ausgerichteten Welle gelagert werden, die die kraftschlüssige Verbindung zwischen dem Führungsabschnitt des Molches und dem nachgezogenen Rohr herstellt. Alternativ dazu kann die Verbindung der Befestigungseinrichtung des Molchs mit seinen in Vortriebsrichtung davor angeordneten Teilen durch Drucklager am Ende der Antriebswelle für den Frästrichter hergestellt werden.

Zwischen den Durchtrittsöffnungen befinden sich Stege, die die Nabe des Frästrichters mit dem nach außen und in Vortriebsrichtung des Molches aufgeweiteten Messer- bzw. Schneidenkranz kraftschlüssig verbinden. Diese Stege können zur Unterstützung des Abtransports des zerkleinerten Materials vorteilhafterweise schaufelförmig ausgebildet sein, und zwar mit tangentialer Anstellung, also winkelig zur Rohrlängsachse.

Der umlaufende Frästrichter wird während des Vortriebs des Molches an das Ende des zu sanierenden Rohres herangedrückt und zerkleinert mit dem auf dem Schneidkranz angeordneten Messern das in seinem Einwirkungsbereich befindliche Rohrleitungsmaterial sowie umgebendes Erdreich oder andere Störkörper.

Vorteilhafterweise sind die Fräs- oder Schneidmesser nach außen hin über den Rand der zu sanierenden Rohrleitung hinausgeführt. Sie schaffen somit während des Vortriebs des Molches einen runden Durchtrittskanal im Erdreich oder in Betoneinfassungen im Umgebungsbereich der zu sanierenden Rohrleitung. Dieser Durchtrittskanal ist ausreichend groß für das einzuziehende neue Rohr. Außerdem wird der entsprechende, ggf. kontaminierte Bodenbereich abgetragen.

Der Molch kann vorzugsweise eine Vibrations- oder Schlageinrichtung enthalten, die Vibrationen oder impulsartige Beschleunigungsstöße in Vortriebsrichtung erzeugt. Diese können den Vortrieb des Molches, der vorteilhafterweise durch einen Seilzug bewirkt wird, sowie das Zerkleinern und den Transport der Rohrleitungsbruchstücke und des eingetragenen Erdreichs zumindest unterstützen, wenn nicht gar übernehmen.

Der wirksame äußere Durchmesser des Frästrichters soll so groß gewählt werden, daß auch Muffen oder andere Rohraufbauten aus Materialien, durch deren Zerstörung und Verbleib im Boden eine Kontamination des Bodens eintreten könnte, in den Frästrichter hineingeführt, zerkleinert und nach hinten aus dem neuen Rohr hinausgeführt werden.

Für den Fall, daß die zu sanierende Rohrleitung mit einem Transportfluid beschickt wird, ist es vorteilhaft, den Führungsabschnitt des Molches mit entsprechenden Durchlässen zu versehen, um das Fluid möglichst ungehindert in den Brechtrichter eintreten zu lassen. Alternativ oder zusätzlich dazu kann es vorteilhaft sein, den Molch an eine Fluidleitung anzuschließen und mit mindestens einer im Brechtrichter mündenden Düse zu versehen, durch die das Transportfluid mit hoher Geschwindigkeit austritt. Verwendet man eine Mehrzahl von Düsen, so sind diese vorzugsweise an eine Kammer angeschlossen, in der die Fluidleitung mündet. Dadurch wird sichergestellt, daß sämtliche Düsen unter allen Umständen eine gleichmäßige Wirkung ausüben.

Im übrigen kann die Eindüsung des Transportfluids sowohl bereits unmittelbar im Wirkungsbereich des Brechtrichters geschehen als auch im Zentrum des Brechtrichters vor dem Eintritt der zerkleinerten Bruchstücke in das neue Rohr oder sogar erst nach diesem Eintritt.

In wesentlicher Weiterbildung der Erfindung wird vorgeschlagen, vor der Brecheinrichtung des Molches eine auf die Innenwand der zu sanierenden Rohrleitung einwirkende Schneideinrichtung anzuordnen, die die Rohrleitung schwächt und den Brechvorgang begünstigt, wobei der Schneidvorgang durch das Transportfluid gespült werden kann. Mindestens Teile der Schneideinrichtung sind vorteilhafterweise um die Molchachse drehbar, so daß sie eine schraubenförmige Schwächungslinie erzeugen, die ggf. von axialen Schwächungslinien geschnitten wird. Dies kann zu optimalen Brechergebnissen führen.

Vorzugsweise wird die Schneideinrichtung von mindestens einem Fräser und/oder mindestens einer Wasserstrahldüse gebildet, wobei letztere abgeschirmt sein kann, sofern sie im Strömungswege des Transportfluids liegt.

Besonders vorteilhaft ist es, wenn die Schneideinrichtung mindestens zwei Kränze von Messern aufweist, wobei die Messer des hinteren Kranzes mit denen des vorderen Kranzes fluchten und radial weiter vorstehen als letztere. Die Schwächungslinien werden auf diese Weise in zwei Schritten erzeugt, wodurch der Materialabtrag sich günstiger gestaltet. U.U. können die Messerkränze allerdings auch gegeneinander versetzt sein. In jedem Falle ist es vorteilhaft, die Messer anzustellen, so daß sie selbsttätig eine Drehbewegung der Schneideinrichtung erzeugen.

In Weiterbildung der Erfindung kann die Schneideinrichtung auch dazu dienen, Leitrillen in der zu sanierenden Rohrleitung zu erzeugen, in die dann am Führungsabschnitt des Molches feststehende oder ausfahrbare Leitstege eingreifen und dafür sorgen, daß der Führungsabschnitt des Molches nicht durch drehende Teile, beispielsweise den Frästrichter, in eine Gegendrehung versetzt wird. Um den Molch in einer zur Vortriebsrichtung stabilen senkrechten Aufrichtung zu halten, kann im Führungsabschnitt des Molches eine Einrichtung eingeschlossen sein, die bei etwaigen Abweichungen der senkrechten Molchachse zu der zum Erdmmittelpunkt gerichteten Ausrichtung selbsttätig durch Korrektur bei der Anbringung der Führungsrillen für einen Ausgleich sorgt, damit der Molch beim weiteren Vortrieb innerhalb der Rohrleitung wieder in die vorgesehene Ausrichtung zurückkehrt oder sich zumindest nicht weiter aus der vorgesehenen Ausrichtung entfernt. Bei Verwendung von Messern zur Erzeugung der Leitrillen ist es vorteilhaft, die Messer während des Vortriebs des Molches in unterschiedlicher Richtung anstellen zu können, sodaß sie selbsttätig eine Drehbewegung der Schneideinrichtung erzeugen, die den Molch bei unerwünschten Drehungen um die Längsachse wieder in die gewünschte Position zurückbringt. Dadurch wird einer Verdrillung von an den Molch angeschlossenen Schläuchen und Leitungen vorgebeugt

In jedem Falle erfüllen die Leitrillen gleichzeitig die Funktion von Schwächungslinien.

Als erfindungswesentlich offenbart gelten auch solche Kombinationen der erfindungsgemäßen Merkmale, die von den vorstehend diskutierten Verknüpfungen abweichen.

Die Erfindung wird im folgenden anhand bevorzugter Ausführungsbeispiele im Zusammenhang mit der beiliegenden Zeichnung näher erläutert. Die Zeichnung zeigt in:
Fig. 1 eine z.T. geschnittene Seitenansicht einer Vorrichtung nach der Erfindung;
Fig. 2 einen Schnitt entlang der Linie A-A in Fig. 1;
Fig. 3 einen Schnitt entlang der Linie B-B in Fig. 1;
Fig. 4 einen Schnitt entlang der Linie C-C in Fig. 1;
Fig. 5 eine abgewandelte Ausführungsform;
Fig. 6 eine weitere abgewandelte Ausführungsform;
Fig. 7 eine weitere abgewandelte Ausführungsform; und
Fig. 8 die erfindungsgemäße Vorrichtung im Einsatz.

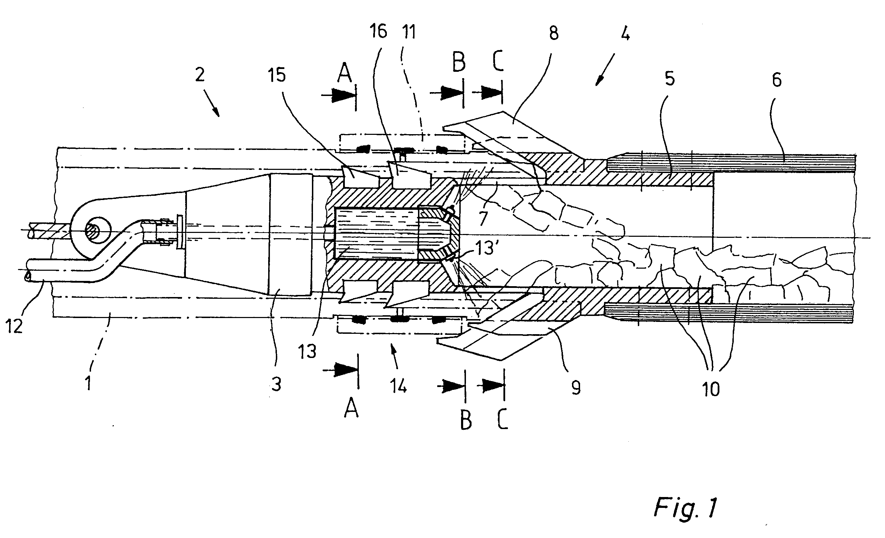

Fig. 1 zeigt eine zu sanierende Rohrleitung 1, durch die ein Molch 2 hindurchgezogen wird. Letzterer weist einen Führungsabschnitt 3, eine Brecheinrichtung 4 sowie eine Befestigungseinrichtung 5 auf, wobei letztere dazu dient, ein neues Rohr 6 anstelle der Rohrleitung 1 einzuziehen.

Die Brecheinrichtung 4 ist durch stangenförmige Zugelemente 7 mit dem Führungsabschnitt 3 verbunden und weist radial längere Brechschneiden 8 sowie radial kürzere Brechschneiden 9 auf. Die Brechschneiden definieren mit ihren Brechkanten einen Brechtrichter. Die Brechkanten wirken von außen nach innen auf die Rohrleitung 1 ein, zerstückeln diese im Zusammenwirken mit den als Brechhilfen dienenden Zugelementen 7 und leiten die Rohrleitungsstücke 10 ins Innere des neuen Rohres 6, wobei durch dieses hindurch der Abtransport erfolgt. Die radial längeren Brechschneiden 8 sind außerdem in der Lage, eine auf der Rohrleitung 1 sitzende Muffe 11 in gleicher Weise zu zerstückeln.

Der Abtransport der Rohrleitungsstücke 10 wird unterstützt durch ein Transportfluid, im vorliegenden Falle Wasser, welches durch eine Fluidleitung 12 in eine Kammer 13 des Molches 2 eingeleitet wird. Von dieser Kammer 13 gehen Düsen 13' aus, die bei gleichmäßiger Druckbeaufschlagung das Transportfluid auf die Brechstelle richten. Da die Rohrleitung 1 im vorliegenden Falle aus Asbestzement besteht, enthält das Transportfluid ein Faserbindemittel. Ferner ist es mit einem Bodenverfestigungsmittel gemischt.

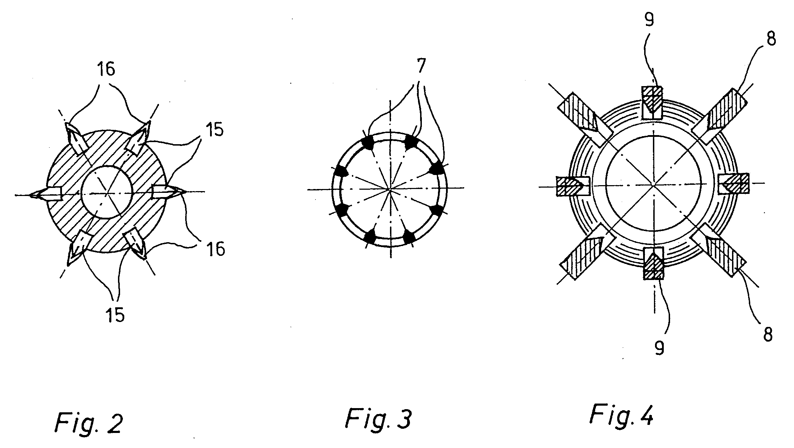

Nach Fig. 1 ist zwischen dem Führungsabschnitt des Molches 2 und dessen Brecheinrichtung 4 eine Schneideinrichtung 14 vorgesehen, die Sollbruchlinien in der zu zerstückelnden Rohrleitung 1 erzeugt. Die Schneideinrichtung 14 weist einen vorderen Kranz von Messern 15 sowie einen hinteren Kranz von Messern 16 auf, wobei letztere radial weiter vorstehen als die Messer des vorderen Kranzes und, wie Fig. 2 zeigt, mit ihnen fluchten. Auf diese Weise erfolgt der Schneidvorgang zweistufig. Die Messer können in einem drehbaren Ring angeordnet und geringfügig angestellt sein, so daß sich der Ring automatisch dreht, wodurch schraubenförmige Schwächungslinien erzeugt werden.

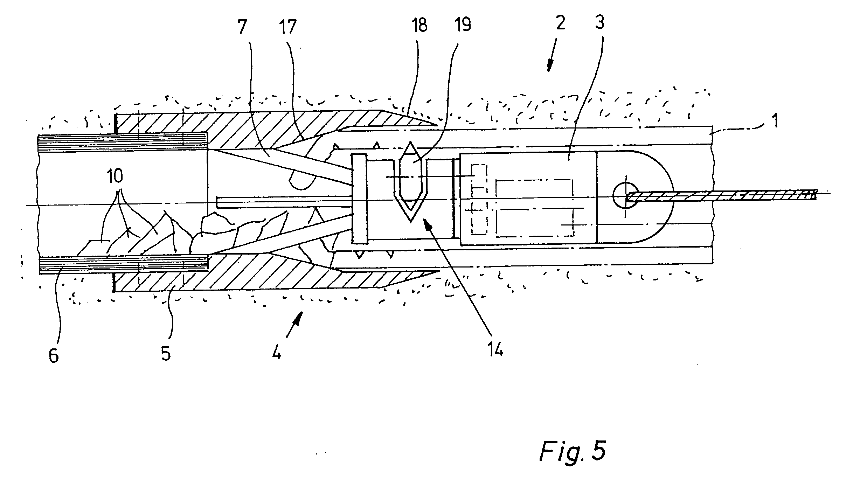

Die Ausführungsform nach Fig. 5 unterscheidet sich von der nach den Fig. 1 bis 4 vor allen Dingen dadurch, daß der Brechtrichter der Brecheinrichtung 4 von einer umlaufenden Wand 17 definiert wird. Diese bildet ein konisch verjüngtes vorderes Ende 18, welches in der Lage ist, sich unter die Muffen 11 zu schieben und diese aufzubrechen. Ferner ist in Fig. 5 die Schneideinrichtung 14 als Fräse 19 ausgebildet. Im vorliegenden Fall wird das Transportfluid durch die Rohrleitung 1 zugeführt und zwischen dieser und dem Molch 2 hindurchgeleitet, wobei sie gleichzeitig die Schneideinrichtung 14 spült.

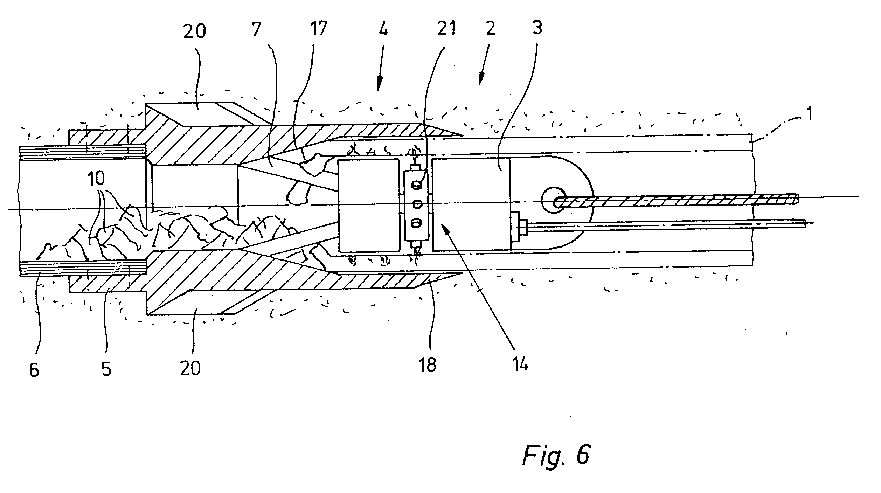

Bei der Ausführungsform nach Fig. 6 trägt die umlaufende Wand 17, die den Bruchtrichter definiert, eine Anzahl radialer Messer 20, mit denen die Dichtungen und sonstige elastische Ringelemente etwaiger Muffenverbindungen zerschnitten werden können. Ferner ist bei dieser Ausführungsform die Schneideinrichtung 14 als umlaufender Kranz von Wasserstrahldüsen 21 ausgebildet.

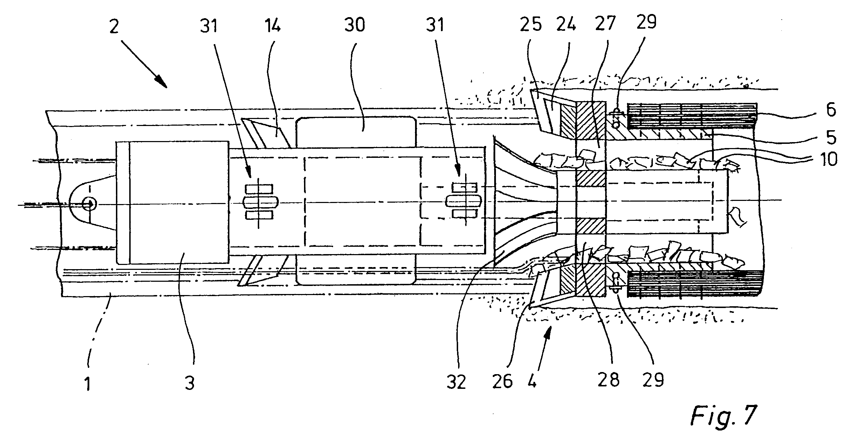

Bei der Ausführungsform nach Fig. 7 ist die Brecheinrichtung 4 als Frästrichter 24 ausgebildet, der unter dem Antrieb eines nicht dargestellten Motors um die Molchachse rotiert, wobei seine Schneiden 25 und 26 die zu sanierende Rohrleitung 1 abarbeiten. Da die Schneiden 25 und 26 über den Außenumfang der Rohrleitung 1 vorstehen, wird gleichzeitig das umgebende Erdreich abgearbeitet. Damit wird zum einen auch die Umgebung der Rohrleitung 1 schadstofffrei gehalten. Zum anderen entsteht reichlich Platz für das neue Rohr 6.

Der umlaufende Kranz der Schneiden 25 und 26 des Frästrichters 24 ist über Stege mit dessen Nabe verbunden, siehe den geschnittenen Bereich in Fig. 7. Zwischen den Stegen bilden sich Öffnungen 27 und 28, durch die die Rohrleitungsstücke 10 zusammen mit dem abgearbeiteten Erdreich hindurchtreten und sodann in das neue Rohr 6 hineingelangen. Ein der Befestigungseinrichtung 5 zugeordneter Düsensatz 29 dient dazu, ein Bodenverfestigungsmittel ins Erdreich zu sprühen.

Die Schneideinrichtung 14 dient im vorliegenden Falle dazu, Leitrillen in die zu sanierende Rohrleitung einzuschneiden. In diese Leitrillen greifen Leitstege 30 ein, die drehfest mit dem Führungsabschnitt 3 des Molches 2 verbunden sind. Auf diese Weise wird der Molch in der Rohrleitung 1 stabilisiert, wobei er das Gegendrehmoment des Frästrichters 24 auf die Rohrleitung überträgt.

Zur Verbesserung der Führungseigenschaften des Führungsabschnitts 3 ist dieser mit Rollen 31 versehen, welche sich an der Innenwand der zu sanierenden Rohrleitung 31 abstützen.

Für den Fall, daß ein Transportfluid durch die Rohrleitung 1 zugeführt wird, verhindert ein Strömungskörper 32 die Ausbildung einer strömungsarmen Zone am Eintritt in den Frästrichter 24.

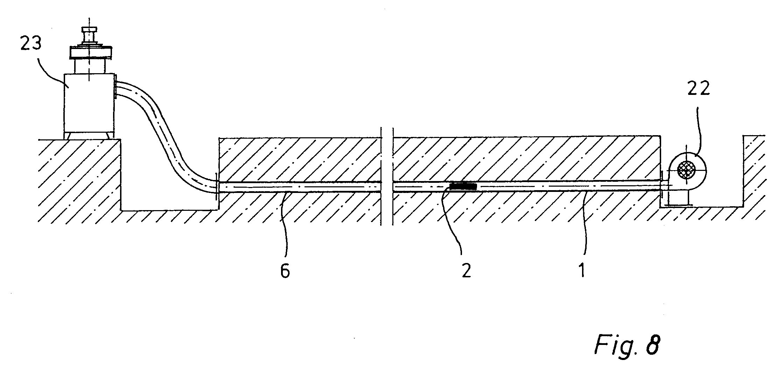

Fig. 8 zeigt den Molch 2 im Einsatz. Die zu sanierende Rohrleitung 1 ist an ein Gebläse 22 angeschlossen, welches Preßluft als Transportfluid liefert. Das neue Rohr 6 mündet mit seinem freien Ende in einem Aufnahmebehälter 23 für die Rohrleitungsstücke 10. Der Aufnahmebehälter 23 steht über ein Filter unter Unterdruck und trägt auf diese Weise zur Abförderung der Rohrleitungsstücke 10 bei. In ihm sammeln sich außerdem sämtliche freigesetzten Partikel des ggf. kontaminierenden Fasermaterials der Rohrleitung.

Im Rahmen der Erfindung sind durchaus weitere Abwandlungsmöglichkeiten gegeben. So kann in Fig. 1 die Fluidleitung 12 ausschließlich dazu dienen, ein Faserbindemittel und/oder ein Bodenverfestigungsmittel zuzuführen. Der Abtransport der Rohrleitungsstücke 10 erfolgt dann nach dem vollständigen Einziehen des neuen Rohres 6. Außerdem kann je nach Material der zu sanierenden Rohrleitung auf eine Schneideinrichtung völlig verzichtet werden. Der Brechtrichter kann, anders als in den Ausführungsbeispielen dargestellt, schraubenlinienförmig konfiguriert sein. Die kurzen Brechschneiden 9 nach Fig. 1 und 4 können ggf. Fortfallen oder durch lange Brechschneiden 8 ersetzt werden. Ggf. kann auch nur mit kurzen Brechschneiden gearbeitet werden, sofern diese in der Lage sind, etwaige Muffen 11 von innen her aufzusprengen. Als Schneideinrichtung 14 kommen beispielsweise auch Fingerfräser in Frage. Ferner können unterschiedliche Schneideinrichtungen miteinander kombiniert werden. Zum Spülen der Schneideinrichtung kann ein geeignetes Fluid, beispielsweise ein Luft-Wasser-Gemisch, gesondert zugeführt werden. Um jeglichen Kontakt zwischen dem kontaminierten Material und der Innenwand des neuen Rohres zu verhindern, kann in letzteres ein Schlauch oder ein Innenrohr eingezogen werden.

## Patentansprüche

1. Verfahren zum Sanieren einer erdverlegten Rohrleitung, wobei die Rohrleitung zerstückelt und durch ein gleichzeitig eingezogenes neues Rohr ersetzt wird,
**dadurch gekennzeichnet,**
daß die Rohrleitung von außen nach innen zerstückelt wird und daß die Rohrleitungsstücke in das neue Rohr eingeleitet und durch dieses abgefördert werden.

2. Verfahren nach Anspruch 1, dadurch gekennzeichnet, daß die zu sanierende Rohrleitung zerfräst wird, und zwar vorzugsweise mitsamt demjenigen Bereich der Umgebung (Erdreich, etwaige An- oder Aufbauten), der das Einziehen des neuen Rohres behindern könnte.

3. Verfahren nach Anspruch 1 oder 2, dadurch gekennzeichnet, daß ein Fluid zum Transport der Rohrleitungsstücke und ggf. des Erdreichs durch das neue Rohr hindurchgefördert wird.

4. Verfahren nach einem der Ansprüche 1 bis 3, dadurch gekennzeichnet, daß an das freie Ende des neuen Rohres ein Unterdruck angelegt wird.

5. Vorrichtung zum Sanieren einer erdverlegten Rohrleitung (1) und zum Einziehen eines neuen Rohres (6), mit einem durch die Rohrleitung hindurch bewegbaren Molch (2), der einen vorderen Führungsabschnitt (3), eine hintere Befestigungseinrichtung (5) für das neue Rohr und eine dazwischenliegende Brecheinrichtung (4) zum Zerstückeln der Rohrleitung aufweist,
**dadurch gekennzeichnet,**
daß die Brecheinrichtung (4) des Molches (2) einen sich nach vorne und außen erweiternden, die zu sanierende Rohrleitung (1) übergreifenden und in das neue Rohr (6) mündenden Brechtrichter definiert, der durch Zugelemente (7) mit dem Führungsabschnitt (3) des Molches verbunden ist.

6. Vorrichtung nach Anspruch 5, dadurch gekennzeichnet, daß der Brechtrichter von einer umlaufenden Wand (17) definiert wird.

7. Vorrichtung nach Anspruch 5, dadurch gekennzeichnet, daß der Brechtrichter von über dem Umfang verteilten Brechschneiden (8, 9) definiert wird.

8. Vorrichtung nach Anspruch 5, dadurch gekennzeichnet, daß der Brechtrichter von einem motorisch um die Molchachse drehbaren Frästrichter (24) definiert wird.

9. Vorrichtung nach einem der Ansprüche 5 bis 8, gekennzeichnet durch mindestens eine am Führungsabschnitt (3) des Molches (2) angeordnete Schneideinrichtung (14) zur Erzeugung mindestens einer Leitrille in der zu sanierenden Rohrleitung (1) und durch mindestens einen am Führungsabschnitt feststehenden oder ausfahrbaren Leitsteg (30) zum Eingriff in die Leitrille.

10. Vorrichtung nach einem der Ansprüche 5 bis 9, dadurch gekennzeichnet, daß der Molch (2) an eine Fluidleitung (12) angeschlossen ist und mindestens eine im Brechtrichter mündende Düse (13) aufweist.
